# EUROPEAN PATENT APPLICATION

(11) **EP 4 748 899 A1**
(43) Date of publication of application: **27.05.2026**
(21) Application number: 24845092.6
(22) Date of filing: 11.03.2024
(51) Int. Cl.: C09J 7/38, C09J 7/29, C09J 11/08, C09J 201/00

(54) **ADHESIVE SHEET**

(30) Priority: 21.07.2023 JP 2023119329
(71) Applicant: Nitto Denko Corporation, Ibaraki-shi, Osaka 567-8680 (JP)
(72) Inventor: UENO Shusaku, Ibaraki-shi, Osaka 567-8680 (JP); NAKAO Kota, Ibaraki-shi, Osaka 567-8680 (JP)
(74) Representative: Müller-Boré & Partner Patentanwälte PartG mbB
(86) International application number: PCT/JP2024/009343
(87) International publication number: WO 2025/022707

(57) **Abstract**

Provided is a pressure-sensitive adhesive sheet, which contains thermally expandable microspheres and can exhibit peeling properties under heating, and in which a change in thickness and a change in surface roughness are suppressed even at a high temperature that does not require peeling. The pressure-sensitive adhesive sheet according to one embodiment of the present invention includes in this order: a base material; a resin layer; and a first pressure-sensitive adhesive layer. The first pressure-sensitive adhesive layer contains thermally expandable microspheres, and a thickness deformation initiation temperature Tf (°C) of the pressure-sensitive adhesive sheet by TMA and a gasification initiation temperature Tgas (°C) of the thermally expandable microspheres by EGA/MS have a relationship of Tf≥Tgas-10.

## Description

### Technical Field

The present invention relates to a pressure-sensitive adhesive sheet, and more specifically, to a pressure-sensitive adhesive sheet that can respond to thermal stimulation to exhibit easy peeling properties.

### Background Art

Hitherto, a pressure-sensitive adhesive sheet has been used to fix or temporarily fix a workpiece at the time of the processing of an electronic component or the like in some cases. For example, in some cases, a pressure-sensitive adhesive sheet has been used as a temporary fixing material for cutting a semiconductor wafer or a ceramic sheet, and a pressure-sensitive adhesive sheet has been used as a temporary fixing material in a step of encapsulating a semiconductor chip in a resin (chip size package: CSP or wafer level package: WLP). As one of such pressure-sensitive adhesive sheets, a pressure-sensitive adhesive sheet, which includes a pressure-sensitive adhesive layer containing thermally expandable microspheres and has pressure-sensitive adhesive strength reduced by foaming of the thermally expandable microspheres under heating, is investigated.

In recent years, high positioning accuracy has started to be required at the time of the encapsulation of a semiconductor chip in a resin for expansion of an adaptable semiconductor device in the field of FOWLP semiconductor packaging. The flowability of an encapsulating resin significantly affects a chip shift in a resin encapsulation step, and the trend toward higher resin encapsulation temperature is accelerating to alleviate a variation in chip shift. When the above-mentioned pressure-sensitive adhesive sheet is used in such resin encapsulation step, the resin encapsulation temperature increases and approaches a temperature at which the thermally expandable microspheres expand, and the thickness of the pressure-sensitive adhesive sheet changs or the surface roughness of the pressure-sensitive adhesive sheet changes. Thus, there occurs a problem in that the variation in chip shift is worsened.

### Citation List

### Patent Literature

[PTL 1] JP 2003-201452 A

### Summary of Invention

### Technical Problem

The present invention has been made to solve the above-mentioned problems of the related art, and an object of the present invention is to provide a pressure-sensitive adhesive sheet, which contains thermally expandable microspheres and can exhibit peeling properties under heating, and in which a change in thickness and a change in surface roughness are suppressed even at a high temperature that does not require peeling.

### Solution to Problem

[1] According to one embodiment of the present invention, there is provided a pressure-sensitive adhesive sheet including in this order: a base material; a resin layer; and a first pressure-sensitive adhesive layer, wherein the first pressure-sensitive adhesive layer contains thermally expandable microspheres, and wherein a thickness deformation initiation temperature Tf (°C) of the pressure-sensitive adhesive sheet by TMA and a gasification initiation temperature Tgas (°C) of the thermally expandable microspheres by EGA/MS have a relationship of Tf≥Tgas-10.
[2] The pressure-sensitive adhesive sheet according to the above-mentioned item [1] may further include a second pressure-sensitive adhesive layer on a side of the base material opposite to the resin layer.
[3] In the pressure-sensitive adhesive sheet according to the above-mentioned item [2], a ratio (change ratio) of a surface roughness Ra(II) of a surface of the second pressure-sensitive adhesive layer after the pressure-sensitive adhesive sheet has been heated under an environment of 130°C for 30 minutes, stored at 25°C/60%RH for 24 hours, and then heated under an environment of 160°C for 450 seconds to a surface roughness Ra(I) of the surface of the second pressure-sensitive adhesive layer after the pressure-sensitive adhesive sheet has been heated under the environment of 130°C for 30 minutes and then stored at 25°C/60%RH for 24 hours may be 130% or less.
[4] In the pressure-sensitive adhesive sheet according to any one of the above-mentioned items [1] to [3], the gasification initiation temperature Tgas of the thermally expandable microspheres may be less than 180°C.
[5] In the pressure-sensitive adhesive sheet according to any one of the above-mentioned items [1] to [3], the gasification initiation temperature Tgas of the thermally expandable microspheres may be equal to or more than 180°C.
[6] In the pressure-sensitive adhesive sheet according to any one of the above-mentioned items [1] to [5], a thickness of the first pressure-sensitive adhesive layer may be smaller than a thickness of the resin layer.
[7] In the pressure-sensitive adhesive sheet according to any one of the above-mentioned items [1] to [6], a volume filling ratio of the thermally expandable microspheres in the first pressure-sensitive adhesive layer may be 21% or less.
[8] In the pressure-sensitive adhesive sheet according to any one of the above-mentioned items [1] to [7], a dynamic storage modulus of elasticity G' at 160°C of the resin layer may be 0.1 MPa or less.
[9] In the pressure-sensitive adhesive sheet according to any one of the above-mentioned items [1] to [8], the base material may have a thickness of from 40 µm to 200 µm.

### Advantageous Effects of Invention

According to the present invention, it is possible to provide the pressure-sensitive adhesive sheet, which contains the thermally expandable microspheres and can exhibit peeling properties under heating, and in which a change in thickness and a change in surface roughness are suppressed even at a high temperature that does not require peeling.

### Brief Description of Drawings

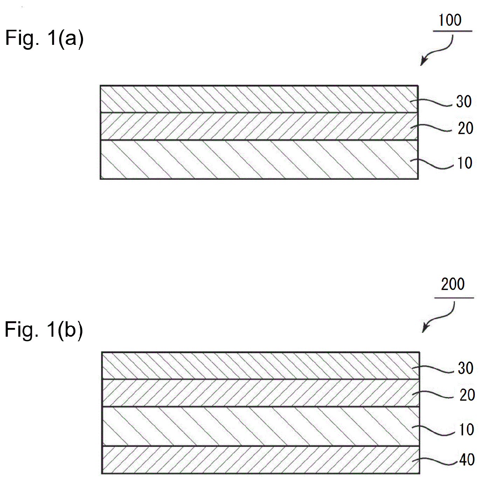

FIG. **1(a)** and FIG. **1(b)** are each a schematic sectional view of a pressure-sensitive adhesive sheet according to one embodiment of the present invention.

### Description of Embodiments

### A. Outline of Pressure-sensitive Adhesive Sheet

FIG. **1(a)** is a schematic sectional view of a pressure-sensitive adhesive sheet according to one embodiment of the present invention. A pressure-sensitive adhesive sheet **100** includes in this order a base material **10,** a resin layer **20,** and a first pressure-sensitive adhesive layer **30.** The first pressure-sensitive adhesive layer **30** contains thermally expandable microspheres. In addition, a second pressure-sensitive adhesive layer **40** may be arranged on the side of the base material **10** opposite to the resin layer **20** as illustrated in FIG. **1(b)****.**

The thermally expandable microspheres can be foamed at a predetermined temperature. When the first pressure-sensitive adhesive layer containing such thermally expandable microspheres is heated, the thermally expandable microspheres are foamed to cause unevenness on its pressure-sensitive adhesive surface (i.e., the surface of the first pressure-sensitive adhesive layer). Thus, the pressure-sensitive adhesive strength of the pressure-sensitive adhesive sheet reduces or disappears. When the pressure-sensitive adhesive sheet of the present invention is used, for example, as a sheet for temporary fixing of a workpiece at the time of the processing of an electronic component (e.g., a semiconductor chip), pressure-sensitive adhesive properties required for temporary fixing are expressed at the time of predetermined processing (e.g., resin encapsulation) of the workpiece, and pressure-sensitive adhesive strength reduces or disappears under heating at the time of the peeling of the workpiece after the processing. Thus, satisfactory peeling properties are expressed.

In the embodiment of the present invention, a thickness deformation initiation temperature Tf (°C) of the pressure-sensitive adhesive sheet by TMA and a gasification initiation temperature Tgas (°C) of the thermally expandable microspheres by EGA/MS have a relationship of Tf≥Tgas-10.

The thickness deformation initiation temperature Tf by TMA refers to a temperature at which the thickness of the pressure-sensitive adhesive sheet begins to change under heating, and the temperature is measured from a displacement-temperature curve determined by TMA. Specifically, the thickness deformation initiation temperature Tf by TMA as used herein refers to a temperature at which the displacement amount is 15 µm with respect to a displacement at 40°C set to a standard (0 µm). In one embodiment, the thickness deformation initiation temperature Tf by TMA is mainly caused by a change in thickness of the first pressure-sensitive adhesive layer due to the behavior of the thermally expandable microspheres. A method of measuring the thickness deformation initiation temperature Tf by TMA is described later.

The gasification initiation temperature Tgas of the thermally expandable microspheres by EGA/MS refers to a temperature at which the thermally expandable microspheres begin to be foamed under heating. Specifically, the gasification initiation temperature Tgas of the thermally expandable microspheres by EGA/MS as used herein refers to a temperature at which the intensity of the peak at a mass m/z of 57 in the EGA/MS of the pressure-sensitive adhesive sheet is 2% of the maximum gas evolution peak intensity.

In the present invention, the thickness deformation initiation temperature Tf and the gasification initiation temperature Tgas of the thermally expandable microspheres have the above-mentioned relationship, and hence there may be obtained a pressure-sensitive adhesive sheet with a small change in surface state (e.g., a change in shape caused by a change in thickness, or a change in roughness) at a high temperature that does not require peeling. When such pressure-sensitive adhesive sheet is used, a variation in chip shift may be suppressed at a high temperature that does not require peeling at the time of the temporary fixing of an electronic component such as a semiconductor chip on the pressure-sensitive adhesive sheet. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. The thickness deformation initiation temperature Tf (°C) by TMA and the gasification initiation temperature Tgas (°C) of the thermally expandable microspheres by EGA/MS preferably have a relationship of Tf≥Tgas-7, more preferably have a relationship of Tf≥Tgas-5, still more preferably have a relationship of Tf≥Tgas-2. When such relationship is achieved, the above-mentioned effect becomes significant. In one embodiment, the upper limit of Tf is Tgas+15°C.

In one embodiment, the thickness deformation initiation temperature Tf by TMA is preferably from 140°C to 300°C, more preferably from 160°C to 250°C.

A pressure-sensitive adhesive strength at 23°C (also referred to as "ordinary state pressure-sensitive adhesive strength X") at the time of the bonding of the first pressure-sensitive adhesive layer of the pressure-sensitive adhesive sheet to polyethylene terephthalate is preferably 0.5 N/20 mm or more, more preferably from 1 N/20 mm to 30 N/20 mm, still more preferably from 2 N/20 mm to 20 N/20 mm, still more preferably from 3.5 N/20 mm to 15 N/20mm. When the pressure-sensitive adhesive strength falls within such ranges, for example, a pressure-sensitive adhesive sheet usable as a sheet for temporary fixing used in the production of an electronic component may be obtained. The pressure-sensitive adhesive strength as used herein refers to a pressure-sensitive adhesive strength in a state in which a reduction in pressure-sensitive adhesive strength caused by the expansion of the thermally expandable microspheres does not occur, and the pressure-sensitive adhesive strength means a pressure-sensitive adhesive strength in a state without a heat history of 40°C or more. In addition, the pressure-sensitive adhesive strength refers to a pressure-sensitive adhesive strength measured by a method in accordance with JIS Z 0237:2009 (bonding conditions: one reciprocation of 2 kg roller, peel rate (tensile rate): 300 mm/min, peel angle: 180°).

The pressure-sensitive adhesive strength at the time of the bonding of the first pressure-sensitive adhesive layer of the pressure-sensitive adhesive sheet to polyethylene terephthalate is reduced to preferably 0.3 N/20 mm or less (more preferably 0.2 N/20 mm or less, still more preferably 0.1 N/20 mm or less) under heating. The heating temperature is preferably from 150°C to 300°C, more preferably from 170°C to 280°C. In one embodiment, the heating temperature can be the gasification initiation temperature Tgas.

A pressure-sensitive adhesive strength Y at a gasification initiation temperature Tgas-10°C at the time of the bonding of the first pressure-sensitive adhesive layer of the pressure-sensitive adhesive sheet to polyethylene terephthalate is preferably from 0.6 N/20 mm to 40 N/20 mm, more preferably from 1.5 N/20 mm to 30 N/20 mm, still more preferably from 3 N/20 mm to 20 N/20 mm.

The ratio (Y/X) of the pressure-sensitive adhesive strength Y at a gasification initiation temperature Tgas-10°C at the time of the bonding of the first pressure-sensitive adhesive layer of the pressure-sensitive adhesive sheet to polyethylene terephthalate to the ordinary state pressure-sensitive adhesive strength X of the first pressure-sensitive adhesive layer is preferably 0.6 or more, more preferably 0.8 or more, still more preferably 0.9 or more. When the ratio falls within such ranges, there may be obtained a pressure-sensitive adhesive sheet with a small change in surface state (e.g., a change in shape caused by a change in thickness, or a change in roughness) at a high temperature that does not require peeling. In one embodiment, the upper limit of Y/X is 1. In another embodiment, the upper limit of Y/X is 1.2.

The thickness of the pressure-sensitive adhesive sheet is preferably from 10 µm to 400 µm, more preferably from 20 µm to 200 µm, still more preferably from 30 µm to 150 µm.

### B. First Pressure-sensitive Adhesive Layer

The first pressure-sensitive adhesive layer contains the thermally expandable microspheres as described above. The first pressure-sensitive adhesive layer may further contain a pressure-sensitive adhesive.

Examples of the pressure-sensitive adhesive for forming the first pressure-sensitive adhesive layer include an acrylic pressure-sensitive adhesive, a rubber-based pressure-sensitive adhesive, and a silicone-based pressure-sensitive adhesive. Of those, an acrylic pressure-sensitive adhesive may be preferably used. In addition, an active energy ray-curable acrylic pressure-sensitive adhesive (hereinafter referred to as "active energy ray-curable pressure-sensitive adhesive") may be used as the pressure-sensitive adhesive. Details of the pressure-sensitive adhesive are described, for example, in JP 2015-168711 A, the description of which is incorporated herein by reference.

### (Acrylic Pressure-sensitive Adhesive)

In one embodiment, an acrylic pressure-sensitive adhesive is used as the pressure-sensitive adhesive. The acrylic pressure-sensitive adhesive is, for example, an acrylic pressure-sensitive adhesive obtained by using, as a base polymer, an acrylic polymer (homopolymer or copolymer), which uses one kind or two or more kinds of (meth)acrylic acid alkyl esters as monomer components.

Specific examples of the (meth)acrylic acid alkyl ester include (meth)acrylic acid C1-20 alkyl esters, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, a (meth)acrylic acid alkyl ester having a linear or branched alkyl group having 4 to 20 (more preferably 6 to 20, particularly preferably 8 to 18) carbon atoms is preferred, and 2-ethylhexyl (meth)acrylate is more preferred.

The acrylic polymer may contain a unit corresponding to any other monomer component copolymerizable with the (meth)acrylic acid alkyl ester, as required, for the purpose of modification of cohesive strength, heat resistance, cross-linkability, or the like. Examples of such monomer component include: carboxyl group-containing monomers, such as acrylic acid, methacrylic acid, carboxyethyl acrylate, carboxypentyl acrylate, itaconic acid, maleic acid, fumaric acid, and crotonic acid; acid anhydride monomers, such as maleic anhydride and itaconic anhydride; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amide-based monomers, such as (meth)acrylamide, N,N-dimethyl(meth)acrylamide, N-butyl(meth)acrylamide, N-methylol (meth)acrylamide, and N-methylolpropane (meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methyl itaconimide, N-ethyl itaconimide, N-butyl itaconimide, N-octyl itaconimide, N-2-ethylhexyl itaconimide, N-cyclohexyl itaconimide, and N-lauryl itaconimide; succinimide-based monomers, such as N-(meth)acryloyloxymethylene succinimide, N-(meth)acryloyl-6-oxyhexamethylene succinimide, and N-(meth)acryloyl-8-oxyoctamethylene succinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic ester-based monomers each having, for example, a heterocycle, a halogen atom, or a silicon atom, such as tetrahydrofurfuryl (meth)acrylate, fluorine (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate; olefin-based monomers, such as isoprene, butadiene, and isobutylene; and vinyl ether-based monomers such as vinyl ether. Those monomer components may be used alone or in combination thereof. Of those, a carboxyl group-containing monomer (particularly preferably acrylic acid) or a hydroxyl group-containing monomer (particularly preferably hydroxyethyl (meth)acrylate) is more preferred. The content of a constituent unit derived from a carboxy group-containing monomer is preferably from 0.1 wt% to 10 wt%, more preferably from 0.5 wt% to 5 wt%, particularly preferably from 1 wt% to 4 wt% with respect to all the constituent units for forming the acrylic polymer. Further, the content of a constituent unit derived from a hydroxyl group-containing monomer is preferably from 0.1 wt% to 20 wt%, more preferably from 0.5 wt% to 10 wt%, particularly preferably from 1 wt% to 7 wt% with respect to all the constituent units for forming the acrylic polymer. Herein, the term "(meth)acrylic" means "acrylic" and/or "methacrylic".

The acrylic pressure-sensitive adhesive may contain any appropriate additive as required. Examples of the additive include a cross-linking agent, a tackifier, a plasticizer (e.g., a trimellitic acid ester-based plasticizer or a pyromellitic acid ester-based plasticizer), a pigment, a dye, a filler, an age resistor, a conductive material, an antistatic agent, a UV absorber, a light stabilizer, a peeling modifier, a softener, a surfactant, a flame retardant, and an antioxidant.

Examples of the cross-linking agent in the acrylic pressure-sensitive adhesive include an isocyanate-based cross-linking agent, an epoxy-based cross-linking agent, a melamine-based cross-linking agent, a peroxide-based cross-linking agent, a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred.

Specific examples of the isocyanate-based cross-linking agent in the acrylic pressure-sensitive adhesive include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylilene diisocyanate; and isocyanate adducts, such as a trimethylolpropane/tolylene diisocyanate trimer adduct (manufactured by Nippon Polyurethane Industry Co., Ltd., product name: "CORONATE L"), a trimethylolpropane/hexamethylene diisocyanate trimer adduct (manufactured by Nippon Polyurethane Industry Co., Ltd., product name: "CORONATE HL"), and an isocyanurate form of hexamethylene diisocyanate (manufactured by Nippon Polyurethane Industry Co., Ltd., product name: "CORONATE HX"). The content of the isocyanate-based cross-linking agent may be set to any appropriate amount in accordance with a desired pressure-sensitive adhesive strength, and the content is typically from 0.1 part by weight to 20 parts by weight, more preferably from 0.5 part by weight to 10 parts by weight with respect to 100 parts by weight of the base polymer.

Examples of the epoxy-based cross-linking agent in the acrylic pressure-sensitive adhesive include N,N,N',N'-tetraglycidyl-m-xylenediamine, diglycidylaniline, 1,3-bis(N,N-glycidylaminomethyl)cyclohexane (manufactured by Mitsubishi Gas Chemical Company, Inc., product name: "TETRAD-C"), 1,6-hexanediol diglycidyl ether (manufactured by Kyoeisha Chemical Co., Ltd., product name: "Epolite 1600"), neopentyl glycol diglycidyl ether (manufactured by Kyoeisha Chemical Co., Ltd., product name: "Epolite 1500NP"), ethylene glycol diglycidyl ether (manufactured by Kyoeisha Chemical Co., Ltd., product name: "Epolite 40E"), propylene glycol diglycidyl ether (manufactured by Kyoeisha Chemical Co., Ltd., product name: "Epolite 70P"), polyethylene glycol diglycidyl ether (manufactured by NOF Corporation, product name: "EPIOL E-400"), polypropylene glycol diglycidyl ether (manufactured by NOF Corporation, product name: "EPIOL P-200"), sorbitol polyglycidyl ether (manufactured by Nagase ChemteX Corporation, product name: "Denacol EX-611"), glycerol polyglycidyl ether (manufactured by Nagase ChemteX Corporation, product name: "Denacol EX-314"), pentaerythritol polyglycidyl ether, polyglycerol polyglycidyl ether (manufactured by Nagase ChemteX Corporation, product name: "Denacol EX-512"), sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and an epoxy-based resin having two or more epoxy groups in a molecule thereof. The content of the epoxy-based cross-linking agent may be set to any appropriate amount in accordance with a desired pressure-sensitive adhesive strength, and the content is typically from 0.01 part by weight to 10 parts by weight, more preferably from 0.03 part by weight to 5 parts by weight with respect to 100 parts by weight of the base polymer.

Any appropriate tackifier is used as the tackifier in the acrylic pressure-sensitive adhesive. For example, a tackifying resin is used as the tackifier. Specific examples of the tackifying resin include a rosin-based tackifying resin (such as unmodified rosin, modified rosin, a rosin phenol-based resin, or a rosin ester-based resin), a terpene-based tackifying resin (such as a terpene-based resin, a terpene phenol-based resin, a styrene-modified terpene-based resin, an aromatic modified terpene-based resin, or a hydrogenated terpene-based resin), a hydrocarbon-based tackifying resin (such as an aliphatic hydrocarbon resin, an aliphatic cyclic hydrocarbon resin, an aromatic hydrocarbon resin (e.g., a styrene-based resin or a xylene-based resin), an aliphatic/aromatic petroleum resin, an aliphatic/alicyclic petroleum resin, a hydrogenated hydrocarbon resin, a coumarone-based resin, or a coumarone indene-based resin), a phenol-based tackifying resin (such as an alkylphenol-based resin, a xylene formaldehyde-based resin, resol, or novolac), a ketone-based tackifying resin, a polyamide-based tackifying resin, an epoxy-based tackifying resin, and an elastomer-based tackifying resin. Of those, a rosin-based tackifying resin, a terpene-based tackifying resin, or a hydrocarbon-based tackifying resin (e.g., a styrene-based resin) is preferred. The tackifiers may be used alone or in combination thereof. The addition amount of the tackifier is preferably from 5 parts by weight to 100 parts by weight, more preferably from 10 parts by weight to 50 parts by weight with respect to 100 parts by weight of the base polymer.

### (Thermally Expandable Microspheres)

Any appropriate thermally expandable microspheres may be used as the thermally expandable microspheres as long as the microspheres can be expanded or foamed through heating. Typically, microspheres each obtained by encapsulating a substance that is gasified by heating and easily expanded in a shell having elasticity may be used as the thermally expandable microspheres. Such thermally expandable microspheres may be manufactured by any appropriate method, such as a coacervation method or an interfacial polymerization method.

Examples of the substance that is gasified by heating and easily expanded include: a liquid, such as propane, propylene, butene, n-butane, isobutane, isopentane, neopentane, n-pentane, n-hexane, isohexane, heptane, octane, petroleum ether, a halomethane, or a tetraalkylsilane; and azodicarbonamide, which is gasified by thermal decomposition.

A substance for forming the shell is, for example, a polymer formed of: a nitrile monomer, such as acrylonitrile, methacrylonitrile, α-chloroacrylonitrile, α-ethoxyacrylonitrile, or fumaronitrile; a carboxylic acid monomer, such as acrylic acid, methacrylic acid, itaconic acid, maleic acid, fumaric acid, or citraconic acid; vinylidene chloride; vinyl acetate; a (meth)acrylic acid ester, such as methyl (meth)acrylate, ethyl (meth)acrylate, n-butyl (meth)acrylate, isobutyl (meth)acrylate, t-butyl (meth)acrylate, isobornyl (meth)acrylate, cyclohexyl (meth)acrylate, benzyl (meth)acrylate, or β-carboxyethyl acrylate; a styrene monomer, such as styrene, α-methylstyrene, or chlorostyrene; or an amide monomer, such as acrylamide, a substituted acrylamide, methacrylamide, or a substituted methacrylamide. The polymer formed of such monomer may be a homopolymer, or may be a copolymer. Examples of the copolymer include a vinylidene chloride-methyl methacrylate-acrylonitrile copolymer, a methyl methacrylate-acrylonitrile-methacrylonitrile copolymer, a methyl methacrylate-acrylonitrile copolymer, and an acrylonitrile-methacrylonitrile-itaconic acid copolymer.

In one embodiment, a liquid containing isooctane is used as a substance that is gasified by heating and easily expanded. The liquid containing isooctane may include another liquid (e.g., isopentane or n-octane). When the liquid containing isooctane is used, the gasification initiation temperature Tgas of the thermally expandable microspheres is high (e.g., 180°C or more), and the first pressure-sensitive adhesive layer having excellent heat resistance may be formed. Thus, there may be easily obtained a pressure-sensitive adhesive sheet with a small change in surface state (e.g., a change in shape caused by a change in thickness, or a change in roughness) at a high temperature that does not require peeling.

The gasification initiation temperature Tgas of the thermally expandable microspheres is preferably from 140°C to 250°C, more preferably from 150°C to 240°C, still more preferably from 160°C to 230°C. The gasification initiation temperature Tgas of the thermally expandable microspheres may be adjusted by the boiling point of a substance (liquid) that is easily expanded by heating, the composition of the substance (liquid) that is easily expanded by heating (e.g., the mixing ratio of substances (liquids) of different kinds), the composition of a polymer for forming a shell, the glass transition temperature of the polymer for forming a shell, the molecular weight of the polymer for forming a shell, the thickness of the shell, and the like.

In one embodiment, the gasification initiation temperature Tgas of the thermally expandable microspheres is less than 180°C.

In another embodiment, the gasification initiation temperature Tgas of the thermally expandable microspheres is equal to or more than 180°C. When Tgas falls within such ranges, the first pressure-sensitive adhesive layer having excellent heat resistance may be formed, and there may be easily obtained a pressure-sensitive adhesive sheet with a small change in surface state (e.g., a change in shape caused by a change in thickness, or a change in roughness) at a high temperature that does not require peeling.

The particle diameter of each of the thermally expandable microspheres before their heating is preferably from 0.5 µm to 80 µm, more preferably from 5 µm to 45 µm, still more preferably from 10 µm to 20 µm, particularly preferably from 10 µm to 15 µm. Accordingly, the particle size of the thermally expandable microspheres before their heating is preferably from 6 µm to 45 µm, more preferably from 15 µm to 35 µm in terms of average particle diameter. The particle diameter and the average particle diameter described above are values determined by a particle size distribution measurement method in a laser scattering method.

The thermally expandable microspheres each have such a moderate strength that rupture does not occur until a volume expansion ratio reaches preferably 5 times or more, more preferably 7 times or more, still more preferably 10 times or more. When such thermally expandable microspheres are used, the pressure-sensitive adhesive strength can be efficiently lowered through heat treatment.

The content of the thermally expandable microspheres in the first pressure-sensitive adhesive layer may be appropriately set in accordance with, for example, a desired property by which the pressure-sensitive adhesive strength of the layer is reduced. The content of the thermally expandable microspheres is, for example, from 1 part by weight to 150 parts by weight, preferably from 10 parts by weight to 130 parts by weight, more preferably from 15 parts by weight to 100 parts by weight with respect to 100 parts by weight of a base polymer for forming the first pressure-sensitive adhesive layer.

In addition, the volume filling ratio of the thermally expandable microspheres in the first pressure-sensitive adhesive layer is preferably 28% or less, more preferably 24% or less, still more preferably 21% or less. When the volume filling ratio falls within such ranges, there may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. An effect obtained by setting the volume filling ratio of the thermally expandable microspheres within the ranges is particularly advantageous when the gasification initiation temperature Tgas of the thermally expandable microspheres is less than 180°C. The volume filling ratio of the thermally expandable microspheres in the first pressure-sensitive adhesive layer is preferably 10% or more, more preferably 15% or more.

The arithmetic surface roughness Ra of the first pressure-sensitive adhesive layer before the expansion of the thermally expandable microspheres (i.e., before their heating) is preferably 500 nm or less, more preferably 400 nm or less, still more preferably 300 nm or less. The arithmetic surface roughness Ra may be measured in accordance with JIS B 0601.

The thickness of the first pressure-sensitive adhesive layer is preferably from 5 µm to 70 µm, more preferably from 10 µm to 60 µm, still more preferably from 10 µm to 50 µm, most preferably from 10 µm to 40 µm. When the thickness falls within such ranges, a pressure-sensitive adhesive sheet having excellent operativity in liner peeling, operativity during bonding, pressure-sensitive adhesive properties, smoothness, and deformability during heating may be obtained. In one embodiment, the thickness of the first pressure-sensitive adhesive layer is set to 20 µm or less. When the thickness falls within such ranges, there may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. The effect is particularly advantageous when the gasification initiation temperature Tgas of the thermally expandable microspheres is less than 180°C.

The thickness of the first pressure-sensitive adhesive layer is preferably smaller than the thickness of the resin layer. When the thicknesses of the layers are adjusted as described above, there may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. The effect obtained by setting the volume filling ratio of the thermally expandable microspheres within the ranges is particularly advantageous when the gasification initiation temperature Tgas of the thermally expandable microspheres is less than 180°C. The difference between the thickness of the first pressure-sensitive adhesive layer and the thickness of the resin layer is preferably 5 µm or more, more preferably from 6 µm to 40 µm, still more preferably from 8 µm to 30 µm.

The modulus of elasticity of the first pressure-sensitive adhesive layer measured at 25°C by a nanoindentation method is preferably less than 100 MPa, more preferably from 0.1 MPa to 50 MPa, still more preferably from 0.1 MPa to 10 MPa. When the modulus of elasticity falls within such ranges, a pressure-sensitive adhesive sheet having an appropriate pressure-sensitive adhesive strength can be obtained. The modulus of elasticity measured by the nanoindentation method refers to a modulus of elasticity determined from an applied load-indentation depth curve, which is obtained by continuously measuring a load to be applied to an indenter and the indentation depth thereof when the indenter is indented into the sample over a time period from the start of loading to the end of unloading. As used herein, the modulus of elasticity by a nanoindentation method refers to a modulus of elasticity measured through use of a nanoindenter (e.g., Triboindenter TI-950 manufactured by Hysitron Inc.) by a single indentation method at a predetermined temperature (25°C) under measurement conditions of an indentation rate of about 500 nm/sec, a drawing rate of about 500 nm/sec, and an indentation depth of about 3,000 nm.

### C. Base Material

The base material may include any appropriate material. In the base material, for example, various sheet-shaped products, such as a plastic film, a plastic sheet, paper, cloth, nonwoven fabric, metal foil, or a plastic laminated body thereof, and a laminate of plastics, may be used. Of those, a plastic film or a plastic sheet (hereinafter referred to as "plastic film") is most preferred from the viewpoints of handleability and cost. A material for the plastic film may be selected as required from the viewpoints of, for example, strength and heat resistance. Examples thereof include: olefin-based resins each containing an α-olefin as a monomer component, such as polyethylene (PE), polypropylene (PP), an ethylene-propylene copolymer, and an ethylene-vinyl acetate copolymer (EVA); polyesters, such as polyethylene terephthalate (PET), polyethylene naphthalate (PEN), and polybutylene terephthalate (PBT); polyvinyl chloride (PVC); polyphenylene sulfide (PPS); amide-based resins, such as polyamide (nylon) and a wholly aromatic polyamide (aramid); polyether ether ketone (PEEK); polyimide; polyetherimide; polystyrene; and an acrylic resin. Those materials may be used alone or in combination thereof. In addition, as the plastic film, any one of an unstretched film, a uniaxially oriented film, or a biaxially oriented film may be used. In addition, those films may be a laminated film formed of two or more film layers, and a film having added thereto a lubricant, such as inactive particles, may be appropriately used from the viewpoint of handleability.

The thickness of the base material is preferably 200 µm or less, more preferably from 1 µm to 200 µm, still more preferably from 5 µm to 200 µm, particularly preferably from 10 µm to 200 µm, particularly preferably from 20 µm to 200 µm, most preferably from 30 µm to 200 µm. When the thickness falls within such ranges, there may be obtained a base material, which can contribute to improvements in liner peeling properties, and is excellent in, for example, strength, flexibility, pliability, and buckling resistance.

In one embodiment, the thickness of the base material is preferably from 40 µm to 200 µm. When the volume filling ratio falls within such ranges, there may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. The effect is particularly advantageous when the gasification initiation temperature Tgas of the thermally expandable microspheres is less than 180°C.

The ratio (change ratio) of a surface roughness Ra(ii) of the surface of the second pressure-sensitive adhesive layer after the pressure-sensitive adhesive sheet has been heated under an environment of 130°C for 30 minutes, stored at 25°C/60%RH for 24 hours, and then heated under an environment of 160°C for 450 seconds to a surface roughness Ra(i) of the surface of the second pressure-sensitive adhesive layer after the pressure-sensitive adhesive sheet has been heated under the environment of 130°C for 30 minutes and then stored at 25°C/60%RH for 24 hours is preferably 130% or less, more preferably from 101% to 128%, still more preferably from 102% to 120%. When the ratio falls within such ranges, there may be obtained a pressure-sensitive adhesive sheet, which has a small change in shape of the surface on the side opposite to the first pressure-sensitive adhesive layer under an environment that does not require peeling, and which can satisfactorily suppress a variation in chip shift.

The modulus of elasticity of the base material at 25°C by a nanoindentation method is preferably from 500 MPa to 5,000 MPa, more preferably from 500 MPa to 4,000 MPa, still more preferably from 700 MPa to 4,000 MPa.

The base material may be subjected to surface treatment. Examples of the surface treatment include corona treatment, chromic acid treatment, ozone exposure, flame exposure, high-voltage electric shock exposure, ionizing radiation treatment, and coating treatment with an undercoating agent.

### D. Resin Layer

The pressure-sensitive adhesive sheet further includes the resin layer arranged between the first pressure-sensitive adhesive layer and the base material as described above. The presence of the resin layer can provide a pressure-sensitive adhesive sheet having excellent followability to an adherend. In addition, the pressure-sensitive adhesive layer containing the thermally expandable microspheres is expanded in thickness along with the expansion of the thermally expandable microspheres under heating, resulting in deformation. However, the resin layer suppresses the deformation in the base material direction, and hence peeling properties are improved. Further, when the characteristics of the resin layer are satisfactorily adjusted (for example, when the flexibility is enhanced), there may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the pressure-sensitive adhesive layer in the pressure-sensitive adhesive sheet (e.g., the base material or the second pressure-sensitive adhesive layer) is suppressed.

In one embodiment, the resin layer may contain any appropriate pressure-sensitive adhesive. Examples of the pressure-sensitive adhesive for forming the resin layer include an acrylic pressure-sensitive adhesive, a rubber-based pressure-sensitive adhesive, and a silicone-based pressure-sensitive adhesive. Of those, an acrylic pressure-sensitive adhesive may be preferably used. In addition, an active energy ray-curable acrylic pressure-sensitive adhesive (hereinafter referred to as "active energy ray-curable pressure-sensitive adhesive") may be used as the pressure-sensitive adhesive. The same pressure-sensitive adhesive as the above-mentioned pressure-sensitive adhesive for forming the first pressure-sensitive adhesive layer is preferably used as the pressure-sensitive adhesive for forming the resin layer.

The thickness of the resin layer is preferably from 1 µm to 60 µm, more preferably from 5 µm to 50 µm, still more preferably from 10 µm to 40 µm. In one embodiment, the thickness of the resin layer is set to 20 µm or more (preferably 25 µm or more). When the thickness falls within such ranges, there may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. The effect is particularly advantageous when the gasification initiation temperature Tgas of the thermally expandable microspheres is less than 180°C.

The modulus of elasticity of the resin layer at 25°C by a nanoindentation method is preferably from 0.001 MPa to 10 MPa, more preferably from 0.01 MPa to 8 MPa, still more preferably from 0.5 MPa to 5 MPa.

The dynamic storage modulus of elasticity G' at 160°C of the resin layer is preferably 0.5 MPa or less, more preferably 0.2 MPa or less, still more preferably 0.1 MPa or less. There may be obtained a pressure-sensitive adhesive sheet with a small change in surface state (e.g., a change in shape caused by a change in thickness, or a change in roughness) at a high temperature that does not require peeling. In one embodiment, a change in surface state of the surface on the side opposite to the outer surface of the first pressure-sensitive adhesive layer in the pressure-sensitive adhesive sheet (e.g., the base material or the second pressure-sensitive adhesive layer) is suppressed. The effect is particularly advantageous when the gasification initiation temperature Tgas of the thermally expandable microspheres is less than 180°C. The lower limit of the dynamic storage modulus of elasticity G' at 160°C of the resin layer is, for example, 0.01 MPa. The storage modulus of elasticity may be measured with a dynamic viscoelasticity-measuring apparatus (e.g., an apparatus available under the product name "ARES-G2" from TA instruments) under the measurement conditions of a frequency of 1 Hz and a rate of temperature increase of 5°C/min.

### E. Second Pressure-sensitive Adhesive Layer

Examples of a pressure-sensitive adhesive for forming the second pressure-sensitive adhesive layer include an acrylic pressure-sensitive adhesive, a rubber-based pressure-sensitive adhesive, and a silicone-based pressure-sensitive adhesive. Of those, an acrylic pressure-sensitive adhesive may be preferably used. In addition, an active energy ray-curable acrylic pressure-sensitive adhesive (hereinafter referred to as "active energy ray-curable pressure-sensitive adhesive") may be used as the pressure-sensitive adhesive. Details of the pressure-sensitive adhesive are described, for example, in JP 2015-168711 A, the description of which is incorporated herein by reference. In one embodiment, the second pressure-sensitive adhesive layer contains the acrylic pressure-sensitive adhesive described in the section B. The acrylic pressure-sensitive adhesive contains the acrylic polymer as a base polymer as describe above.

The thickness of the second pressure-sensitive adhesive layer is preferably from 1 µm to 50 µm, more preferably from 2 µm to 60 µm, still more preferably from 3 µm to 35 µm, most preferably from 5 µm to 35 µm. When the thickness falls within such ranges, a pressure-sensitive adhesive sheet having excellent operativity in liner peeling, operativity during bonding, pressure-sensitive adhesive properties, and smoothness may be obtained. Further, there may be obtained a pressure-sensitive adhesive sheet with a small change in surface state (e.g., a change in shape caused by a change in thickness, or a change in roughness) at a high temperature that does not require peeling.

The modulus of elasticity of the second pressure-sensitive adhesive layer at 25°C by a nanoindentation method is preferably from 0.001 MPa to 10 MPa, more preferably from 0.01 MPa to 8 MPa. When the modulus of elasticity falls within such ranges, a pressure-sensitive adhesive sheet having excellent operativity during bonding, pressure-sensitive adhesive properties, and smoothness may be obtained.

The ratio (change ratio) of a surface roughness Ra(II) of the surface of the second pressure-sensitive adhesive layer after the pressure-sensitive adhesive sheet including the second pressure-sensitive adhesive layer has been heated under an environment of 130°C for 30 minutes, stored at 25°C/60%RH for 24 hours, and then heated under an environment of 160°C for 450 seconds to a surface roughness Ra(I) of the surface of the second pressure-sensitive adhesive layer after the pressure-sensitive adhesive sheet including the second pressure-sensitive adhesive layer has been heated under the environment of 130°C for 30 minutes and then stored at 25°C/60%RH for 24 hours is preferably 130% or less, more preferably from 101% to 128%, still more preferably from 102% to 120%. When the ratio falls within such ranges, there may be obtained a pressure-sensitive adhesive sheet, which has a small change in shape of the surface of the second pressure-sensitive adhesive layer under an environment that does not require peeling, and which can satisfactorily suppress a variation in chip shift. Heating and storage at the time of measurement of Ra(I) may be performed while a SUS plate is bonded to the surface of the second pressure-sensitive adhesive layer.

### F. Method of producing Pressure-sensitive Adhesive Sheet

The above-mentioned pressure-sensitive adhesive sheet may be produced by any appropriate method. Examples of the method of producing a pressure-sensitive adhesive sheet include: a method including directly applying a composition for forming a resin layer onto the base material to form the resin layer, and applying a composition for forming a first pressure-sensitive adhesive layer (pressure-sensitive adhesive+thermally expandable microspheres) onto the resin layer; and a method including applying a composition for a first pressure-sensitive adhesive layer onto any appropriate base material to form an applied layer, and transferring the applied layer onto a laminate of the base material and the resin layer. When the pressure-sensitive adhesive sheet includes the second pressure-sensitive adhesive layer, the second pressure-sensitive adhesive layer may be formed by applying a composition for forming a second pressure-sensitive adhesive layer (pressure-sensitive adhesive) to the surface of the base material on the side opposite to the resin layer.

Methods of applying the respective compositions are each, for example, an application method including using a die coater, a comma coater, or a gravure coater. Drying under heating is preferably adopted as a drying method. For example, drying may be performed by arranging a pressure-sensitive adhesive-applied layer for any appropriate time in a dryer equipped with a blower capable of inducing forced convection of air set to a predetermined temperature.

The drying temperature is preferably 55°C or more and less than 100°C, more preferably from 60°C to 90°C, still more preferably from 65°C to 90°C. The drying time may be set to any appropriate time. The drying time is, for example, from 1 minute to 10 minutes. When the drying temperature and the drying time fall within such ranges, a pressure-sensitive adhesive layer and the like may be efficiently formed.

### G. Applications

The pressure-sensitive adhesive sheet may be preferably used as a sheet for temporary fixing at the time of the processing of any appropriate member (e.g., an electronic component such as a semiconductor chip). In one embodiment, the above-mentioned pressure-sensitive adhesive sheet may be used as a sheet for temporary fixing in the field of semiconductor packaging of fan out wafer level package (FOWLP). In one embodiment, a plurality of semiconductor chips may be arranged as workpieces on the surface of the pressure-sensitive adhesive sheet on the side opposite to the first pressure-sensitive adhesive layer (e.g., the surface of the second pressure-sensitive adhesive layer). The pressure-sensitive adhesive sheet in which the semiconductor chips are arranged is subjected to a predetermined resin encapsulation step. Even when the above-mentioned pressure-sensitive adhesive sheet is exposed to a high temperature in the resin encapsulation step, a change in surface shape (a change in shape caused by a change in thickness, a change in surface roughness, etc.) hardly occurs, and a variation in chip shift between the semiconductor chips can be reduced.

### Examples

The present invention is specifically described below by way of Examples. However, the present invention is by no means limited to these Examples. In addition, the terms "part(s)" and "%" in Examples are by weight unless otherwise stated.

### [Production Example 1] Production of Base Polymer 1

30 parts by weight of 2-ethylhexyl acrylate (EHA), 70 parts by weight of ethyl acrylate (EA), 5 parts by weight of methyl methacrylate (MMA), and 4 parts by weight of 2-hydroxyethyl acrylate (HEA) were added to a toluene solvent, 0.5 part by weight of t-butyl peroxy 2-ethylhexanoate (product name: Perbutyl O (trademark) manufactured by Nippon Oil & Fats Co., Ltd.) was further added as a polymerization initiator, and the mixture was stirred at from 80°C to 90°C for 12 hours to provide a toluene solution of a polymer 1 having a solid content concentration of 40%.

### [Production Example 2] Production of Composition 1 for forming Pressure-sensitive Adhesive Layer (Pressure-sensitive Adhesive+Thermally Expandable Microspheres)

The toluene solution of the polymer 1 (polymer 1: 100 parts by weight), 1.4 parts by weight of an isocyanate-based cross-linking agent (product name: "Takenate D-101A" manufactured by Mitsui Chemicals, Inc.), 10 parts by weight of a tackifying resin (product name: "Sumilite PR12603" manufactured by Sumitomo Bakelite Co., Ltd.), 30 parts by weight of thermally expandable microspheres (product name: "Advancell EM504" manufactured by Sekisui Chemical Co., Ltd., average particle diameter: 19 µm), and 0.05 part by weight of dioctyltin dilaurate were mixed to produce a composition 1 for forming a pressure-sensitive adhesive layer.

### [Production Examples 3 to 7] Production of Compositions 2 to 6 for forming Pressure-sensitive Adhesive Layers

Compositions 2 to 6 for forming pressure-sensitive adhesive layers were each produced in the same manner as in Production Example 2 except that the kind and blending amount of the thermally expandable microspheres were changed as shown in Table 1.

### <Thermally Expandable Microspheres>

F-230D: product name: "Matsumoto Microsphere F-230D" manufactured by Matsumoto Yushi-Seiyaku Co., Ltd., average particle diameter: 23 µm
F-2800D: product name: "Matsumoto Microsphere F-2800D" manufactured by Matsumoto Yushi-Seiyaku Co., Ltd., average particle diameter: 28 µm

**Table 1**

| | | Production Example 2 | Production Example 3 | Production Example 4 |
|---|---|---|---|---|
| | | Composition 1 for forming pressure-sensitive adhesive layer | Composition 2 for forming pressure-sensitive adhesive layer | Composition 3 for forming pressure-sensitive adhesive layer |
| Base polymer composition | | 2-EHA/EA/MMA/HEA=30 /70/5/4 | 2-EHA/EA/MMA/HEA=30/ 70/5/4 | 2-EHA/EA/MMA/HEA=30/ 70/5/4 |
| | Tackifying resin | Terpene phenol | Terpene phenol | Terpene phenol |
| | Product name | Sumiliteresin PR-12603 | Sumiliteresin PR-12603 | Sumiliteresin PR-12603 |
| | Number of parts (part(s) by weight) | 10 | 10 | 10 |
| | Kind of cross-linking agent | Isocyanate-based | Isocyanate-based | Isocyanate-based |
| | Product name | Takenate D-101A | Takenate D-101A | Takenate D-101A |
| | Number of parts (part(s) by weight) | 1.4 | 1.4 | 1.4 |
| | Kind of cross-linking catalyst | Organotin-based | Organotin-based | Organotin-based |
| | Product name | Embilizer OL-1 | Embilizer OL-1 | Embilizer OL-1 |
| | Number of parts (part(s) by weight) | 0.05 | 0.05 | 0.05 |
| | Thermally expandable microspheres | Advancell | Advancell | Matsumoto Microsphere |
| | Product name | EM504 | EM504 | F-230D |
| | Number of parts (part(s) by weight) | 30 | 20 | 20 |
| | | | | |

| | | Production Example 5 | Production Example 6 | Production Example 7 |
|---|---|---|---|---|
| | | Composition 4 for forming pressure-sensitive adhesive layer | Composition 5 for forming pressure-sensitive adhesive layer | Composition 6 for forming pressure-sensitive adhesive layer |
| Base polymer composition | | 2-EHA/EA/MMA/HEA=30 /70/5/4 | 2-EHA/EA/MMA/HEA=30/ 70/5/4 | 2-EHA/EA/MMA/HEA=30/ 70/5/4 |
| | Tackifying resin | Terpene phenol | Terpene phenol | Terpene phenol |
| | Product name | Sumiliteresin PR-12603 | Sumiliteresin PR-12603 | Sumiliteresin PR-12603 |
| | Number of parts (part(s) by weight) | 10 | 10 | 10 |
| | Kind of cross-linking agent | Isocyanate-based | Isocyanate-based | Isocyanate-based |
| | Product name | Takenate D-101A | Takenate D-101A | Takenate D-101A |
| | Number of parts (part(s) by weight) | 1.4 | 1.4 | 1.4 |
| | Kind of cross-linking catalyst | Organotin-based | Organotin-based | Organotin-based |
| | Product name | Embilizer OL-1 | Embilizer OL-1 | Embilizer OL-1 |
| | Number of parts (part(s) by weight) | 0.05 | 0.05 | 0.05 |
| | Thermally expandable microspheres | Matsumoto Microsphere | Advancell | Advancell |
| | Product name | F-2800D | EM504 | EM504 |
| | Number of parts (part(s) by weight) | 20 | 40 | 50 |

### [Production Example 8] Production of Composition 1 for forming Resin Layer

The toluene solution of the polymer 1 (polymer 1: 100 parts by weight) and 3 parts by weight of an isocyanate-based cross-linking agent (product name: "Takenate D-101A" manufactured by Mitsui Chemicals, Inc.) were mixed to produce a composition 1 for forming a resin layer.

### [Production Example 9] Production of Composition 2 for forming Resin Layer

A composition 2 for forming a resin layer was produced in the same manner as in Production Example 8 except that the blending amount of the isocyanate-based cross-linking agent (product name: "Takenate D-101A" manufactured by Mitsui Chemicals, Inc.) was set to 1 part by weight.

### [Production Example 10] Production of Pressure-sensitive Adhesive 7

The toluene solution of the polymer 1 (polymer 1: 100 parts by weight), 1.5 parts by weight of an isocyanate-based cross-linking agent (product name: "Takenate D-101A" manufactured by Mitsui Chemicals, Inc.), 5 parts by weight of a tackifying resin (product name: "Sumilite PR12603" manufactured by Sumitomo Bakelite Co., Ltd.), and 0.05 part by weight of dioctyltin dilaurate were mixed to produce a pressure-sensitive adhesive 7.

### [Example 1]

### (Production of Laminate of Resin Layer and Base Material)

The above-mentioned composition 1 for forming a resin layer was applied to one surface of a PET base material (thickness: 38 µm) with an applicator so that the thickness after volatilization of a solvent (drying) was 13 µm. After that, the solvent was volatilized (dried) at 150°C for 1 minute with a forced-convection-type hot air drying furnace. Thus, a laminate of a resin layer and a base material was obtained.

### (Production of Laminate of MRF-38 (Liner) and First Pressure-sensitive Adhesive Layer (containing Thermally Expandable Microspheres))

The above-mentioned composition 1 for forming a pressure-sensitive adhesive layer was applied to a release treatment agent-applied surface of a liner (PET film, product name: "MRF-38" manufactured by Mitsubishi Plastics, Inc.), to which a silicone-based release treatment agent had been applied, so that the thickness after volatilization of a solvent (drying) was 20 µm. After that, the solvent was volatilized (dried) at 65°C for 5 minutes with a forced-convection-type hot air drying furnace. Thus, a laminate of MRF-38 (liner) and a first pressure-sensitive adhesive layer (containing thermally expandable microspheres) was obtained.

### (Production of Laminate of MRF-38 (Liner), First Pressure-sensitive Adhesive Layer (containing Thermally Expandable Microspheres), Resin Layer, and Base Material)

The laminate of MRF-38 (liner) and the first pressure-sensitive adhesive layer (containing thermally expandable microspheres), and the laminate of the resin layer and the base material were bonded so that the first pressure-sensitive adhesive layer (containing thermally expandable microspheres) faced the resin layer. Thus, a laminate of MRF-38 (liner), the pressure-sensitive adhesive layer (containing thermally expandable microspheres), the resin layer, and the base material was obtained.

### (Production of Laminate of MRF-50 (Liner) and Second Pressure-sensitive Adhesive Layer)

The above-mentioned pressure-sensitive adhesive 7 was applied to a release treatment agent-applied surface of a liner (PET film, product name: "MRF-50" manufactured by Mitsubishi Plastics, Inc.), to which a silicone-based release treatment agent had been applied, so that the thickness after volatilization of a solvent (drying) was 5 µm. After that, the solvent was volatilized (dried) at 150°C for 1 minute with a forced-convection-type hot air drying furnace. Thus, a laminate of MRF-50 (liner) and a second pressure-sensitive adhesive layer was obtained.

### (Production of Pressure-sensitive Adhesive Sheet with Liners)

The laminate of MRF-38 (liner), the first pressure-sensitive adhesive layer (containing thermally expandable microspheres), the resin layer, and the base material, and the laminate of MRF-50 (liner) and the second pressure-sensitive adhesive layer were bonded so that the base material faced the second pressure-sensitive adhesive layer. Thus, there was obtained a pressure-sensitive adhesive sheet with liners (MRF-38 (liner) / the pressure-sensitive adhesive layer (containing thermally expandable microspheres)/the resin layer/the base material/the second pressure-sensitive adhesive layer/MRF-50 (liner)).

### [Examples 2 to 9 and Comparative Examples 1 to 3]

Pressure-sensitive adhesive sheets with liners were each obtained in the same manner as in Example 1 except that the composition for forming a pressure-sensitive adhesive layer used in the formation of the first pressure-sensitive adhesive layer, the thickness of the first pressure-sensitive adhesive layer, the composition for forming a resin layer used in the formation of the resin layer, the thickness of the resin layer, and the thickness of the base material were changed as shown in Table 2 or Table 3.

### <Evaluation>

The liner was peeled from the pressure-sensitive adhesive sheet with liners obtained in each of Examples and Comparative Examples, and the pressure-sensitive adhesive sheet was then subjected to the following evaluations. The results are shown in Table 2 or Table 3.

### (1) Volume Filling Ratio of Thermally Expandable Microspheres

(i) A sample was fixed on a holder with the first pressure-sensitive adhesive layer of the pressure-sensitive adhesive sheet before heating facing upward, and 1,601 sequential transmission images at angles of from 0° to 180° were acquired by X-ray CT. X-ray CT was performed through use of ZEISS, Xradia 520 Versa at a tube voltage of 40 kV, a tube current of 73 µA, and a pixel size of 0.3 µm/pixel.
(ii) A tomographic image was created by reconstruction of all the resultant transmission images, and a three-dimensional reconstructed image (TIF stack image) and a reconstructed cross-sectional image (three-view drawing) were created through use of analyzing software Image J.
(iii) The obtained three-dimensional reconstructed image (TIF stack image) was subjected to image processing so that thermally expandable microspheres were identified. The volume filling ratio in the thickness direction was calculated from the results of the identification.

The thickness of the pressure-sensitive adhesive layer of each sample was measured by observation of a SEM cross section, and the filling ratio was calculated using a value excluding a bubble part as a total volume.

### (2) Gasification Initiation Temperature Tgas of Thermally Expandable Microspheres

About 0.5 mg of each of the pressure-sensitive adhesive sheets serving as a sample was set on a heating furnace-type pyrolyzer and heated, and the volatilized component was subjected to EGA-MS that was mass spectrometry to provide a mass chromatogram. The temperature was increased with a heating furnace-type pyrolyzer (product name: "PY2020iD" manufactured by Frontier Laboratories Ltd.) from 40°C to 500°C at a rate of temperature increase of 10°C/min, and the maximum gas evolution peak intensity was measured from a mass chromatogram at a mass m/z of 57 through use of a GC/MS analyzer (product name: "JMS-T100GCV" manufactured by JEOL Ltd.). The gasification initiation temperature is defined as a temperature at which the peak intensity reaches 2% of the maximum gas evolution peak intensity in an EGA/MS chromatogram obtained by EGA.

### (3) Ordinary State Pressure-sensitive Adhesive Strength X

The pressure-sensitive adhesive sheet obtained in each of Examples and Comparative Examples was cut into a size of 20 mm in width and 140 mm in length.

A polyethylene terephthalate film (product name: "Lumirror S-10" manufactured by Toray Industries, Inc.; thickness: 25 µm, width: 30 mm) serving as an adherend was bonded to the surface of the pressure-sensitive adhesive sheet on the side of the first pressure-sensitive adhesive layer by reciprocating a 2 kg roller once in accordance with JIS Z 0237:2009 with both sides of the polyethylene terephthalate film protruding by 5 mm in a width direction.

A metal plate (SUS304 plate, thickness: 3 mm) was bonded to the surface of the pressure-sensitive adhesive sheet on the side of the second pressure-sensitive adhesive layer via a double-sided tape (product name: "No. 500" manufactured by Nitto Denko Corporation) to prepare a measurement sample.

After that, the load when the adherend was peeled from the pressure-sensitive adhesive sheet in the longitudinal direction under conditions of a peel angle of 180° and a peel rate (tensile rate) of 300 mm/min was measured, the maximum load at that time (the maximum value of the load excluding the peak top at the beginning of measurement) was determined, and the maximum load was divided by the tape width to provide a pressure-sensitive adhesive strength (N/20 mm in width). The above-mentioned operation was performed under an atmosphere at a temperature of 23°C.

### (4) Pressure-sensitive Adhesive Strength Y after heating at (Tgas-10)°C

The pressure-sensitive adhesive strength at (Tgas-10)°C was measured in accordance with the method described in the section (1).

### (5) Pressure-sensitive Adhesive Strength after heating at (Tgas+15)°C

The pressure-sensitive adhesive strength at (Tgas+15)°C was measured in accordance with the method described in the section (1).

### (6) Storage Modulus of Elasticity of Resin Layer

The storage modulus of elasticity G' at a measurement frequency of 1 Hz, a distortion of 0.05%, and 160°C was measured with a dynamic viscoelasticity-measuring apparatus (product name: "ARES-G2" manufactured by TA instruments). Specifically, the storage modulus of elasticity was measured by the following method.

A resin layer with a thickness of 50 µm was formed using the same resin layer as the resin layer used in each of Examples and Comparative Examples, and the resin layers were laminated to provide a sample with a thickness of 1 mm or more. The resultant sample was punched into a size with a diameter of 8 mm, and set on a probe of "ARES-G2". The temperature was increased from - 50°C to 260°C at a rate of temperature increase of 5°C/min, and the value of the storage modulus of elasticity G' at 160°C was obtained.

### (7) Thickness Deformation Initiation Temperature Tf by TMA

The displacement-temperature curve of each of the pressure-sensitive adhesive sheets was measured through use of TMA Q400 (manufactured by TA instruments) and a probe with a diameter of 3.0 mm in an extension mode under conditions of a nitrogen gas flow rate of 50.0 ml/min, an indentation load of 0.0196 N, a measurement temperature range of from 40°C to 260°C, and a rate of temperature increase of 5°C/min. The thickness deformation initiation temperature Tf by TMA is defined as a temperature at which the displacement amount is 15 µm with respect to a displacement at 40°C set to a standard (0 µm). The number N of times of the measurement to be performed was set to 5, and the average of 3 measured values except the maximum and minimum of these N measured values was adopted as the thickness deformation initiation temperature Tf of the sample.

### (8) Variation in Chip Shift

The first pressure-sensitive adhesive layer of the pressure-sensitive adhesive sheet obtained in each of Examples and Comparative Examples was bonded to a SUS substrate (thickness: 0.8 mm, diameter: 12 inches) through use of a laminator. In bonding, a bonding rate was set to 0.5 m/min, a temperature condition was set to normal temperature, and a pressure condition was set to 0.3 MPa. Next, of a total of 25 silicon chips (thickness: 400 µm, 7 mm square), eight chips were each radially arranged at distances of 25 mm, 50 mm, and 100 mm from the chip at the center on the pressure-sensitive adhesive sheet, and the silicon chips were pressure-bonded to the pressure-sensitive adhesive sheet at a pressure of 0.2 MPa for a pressure-bonding time of 1.0 second. Next, the chips were observed with a computer numerical control (CNC) image measurement apparatus (product name: "Quickvision Pro" manufactured by Mitutoyo Corporation), and the initial position of each of the chips on the pressure-sensitive adhesive sheet was measured. Next, the SUS substrate including the silicon chips bonded on the pressure-sensitive adhesive sheet was preheated in a dryer at 130°C for 30 minutes, and then stored in a constant temperature and humidity chamber set to 25°C/60%RH for 24 hours. The obtained sample was set on a compression molding apparatus (product name: "CPM1080" manufactured by Towa Corporation), and encapsulated in an encapsulating resin (product name: "SUMIKON EME-G750" manufactured by Sumitomo Bakelite Co., Ltd.) at an encapsulating temperature of 160°C and a pressure of 50 tons for an encapsulation time of 450 seconds. Next, the sample encapsulated in the resin was heated in a drying oven at from 200°C to 240°C for 5 minutes so that the pressure-sensitive adhesive strength of the first pressure-sensitive adhesive layer (heat-foaming-type pressure-sensitive adhesive layer) of the pressure-sensitive adhesive sheet was reduced. After that, the pressure-sensitive adhesive sheet and the encapsulating resin substrate were heated and peeled from the SUS substrate. Further, the encapsulating resin substrate was heated on a hot plate heated in advance to 150°C, and the second pressure-sensitive adhesive layer of the pressure-sensitive adhesive sheet was peeled. The obtained encapsulating resin substrate was observed with a CNC image measurement apparatus (product name: "Quickvision Pro" manufactured by Mitutoyo Corporation), and the position of each of the chips in the encapsulating resin substrate after the encapsulation was measured. From the resultant positional information of the silicon chips, the relative distances between the chip at the center and each of the chips in the initial positions and the positions after the encapsulation were calculated, and the change amount (chip shift) from the relative distance in the initial state to the relative distance after the encapsulation was measured. The maximum value and minimum value of the chip shift of each of the eight silicon chips arranged at a position of 100 mm from the chip at the center were read, and the difference between the maximum value and the minimum value was defined as a variation in chip shift.

**Table 2**

| | | Example 1 | Example 2 | Example 3 | Example 4 |
|---|---|---|---|---|---|
| Configuration of pressure-sensitive adhesive sheet | Second pressure-sensitive adhesive layer | Pressure-sensitive adhesive (7)/5 µm | Pressure-sensitive adhesive (7)/5 µm | Pressure-sensitive adhesive (7)/5 µm | Pressure-sensitive adhesive (7)/5 µm |
| | Base material | PET | PET | PET | PET |
| | Thickness of base material [µm] | 38 | 38 | 38 | 38 |
| | Composition for forming resin layer | Composition 1 for forming resin layer | Composition 2 for forming resin layer | Composition 2 for forming resin layer | Composition 2 for forming resin layer |
| | Resin layer thickness [µm] | 28 | 28 | 35 | 28 |
| | First pressure-sensitive adhesive layer/composition for forming pressure-sensitive adhesive layer | Composition 1 for forming pressure-sensitive adhesive layer | Composition 2 for forming pressure-sensitive adhesive layer | Composition 2 for forming pressure-sensitive adhesive layer | Composition 3 for forming pressure-sensitive adhesive layer |
| | Thickness of first pressure-sensitive adhesive layer [µm] | 20 | 20 | 13 | 20 |
| | Thickness of pressure-sensitive adhesive sheet [µm] | 91 | 91 | 91 | 91 |
| Characteristics of first pressure-sensitive adhesive layer | Ordinary state pressure-sensitive adhesive strength X [N/20 mn] | 3.90 | 5.23 | 4.85 | 5.75 |
| | Pressure-sensitive adhesive strength after heating at (Tgas-10)°C Y [N/20 mn] | 3.45 | 4.50 | 4.50 | 4.60 |
| | Pressure-sensitive adhesive strength after heating at (T_{gas}+15)°C [N/20 mn] | 0.04 | 0.09 | 0.07 | 0.05 |
| | Residual ratio of pressure-sensitive adhesive strength Y/X [%] | 88% | 86% | 93% | 80% |
| | Foaming initiation temperature of thermally expandable microspheres T_{gas} [°C] | 175 | 175 | 175 | 195 |
| | Volume filling ratio of thermally expandable microspheres | 23.0% | 16.5% | 16.5% | 27.1% |
| Characteristics of resin layer | Storage modulus of elasticity G' at 160°C [MPa] | 0.14 | 0.06 | 0.06 | 0.06 |
| Heat resistance of pressure- | Sheet thickness deformation initiation temperature by TMA T_{foaming} | 168.1 | 169.8 | 173.4 | 194.6 |
| sensitive adhesive sheet | [°C] | | | | |
| | T_{gas}-10 [°C] | 165.0 | 165.0 | 165.0 | 185.0 |
| Unevenness of surface on second pressure-sensitive adhesive layer | Ra after heating at 130°C for 30 minutes and storage at 25°C/60%RH for 1 day (Initial) [nm] | 188.1 | 187.4 | 184.0 | 184.9 |
| | Ra after heating at 160°C for 450 seconds after the storage (After heating) [nm] | 239.2 | 198.9 | 186.4 | 197.7 |
| | Ra change ratio before and after heating [%] | 127.2% | 106.2% | 101.3% | 107.0% |
| | Variation in chip shift (Max-Min.) [µm] | 29.4 | 22.4 | 19.6 | 20.1 |
| | | | | | |

| | | Example 5 | Example 6 | Example 7 | Example 8 |
|---|---|---|---|---|---|
| Configuration of pressure-sensitive adhesive sheet | Second pressure-sensitive adhesive layer | Pressure-sensitive adhesive layer (7)/5 µm | Pressure-sensitive adhesive layer (7)/5 µm | Pressure-sensitive adhesive layer (7)/5 µm | Pressure-sensitive adhesive layer (7)/5 µm |
| | Base material | PET | PET | PET | PET |
| | Thickness of base material [µm] | 38 | 38 | 50 | 100 |
| | Composition for forming resin layer | Composition 2 for forming resin layer | Composition 2 for forming resin layer | Composition 1 for forming resin layer | Composition 1 for forming resin layer |
| | Resin layer thickness [µm] | 35 | 28 | 28 | 28 |
| | First pressure-sensitive adhesive layer/composition for forming pressure-sensitive adhesive layer | Composition 3 for forming pressure-sensitive adhesive layer | Composition 4 for forming pressure-sensitive adhesive layer | Composition 1 for forming pressure-sensitive adhesive layer | Composition 1 for forming pressure-sensitive adhesive layer |
| | Thickness of first pressure-sensitive adhesive layer [µm] | 13 | 20 | 20 | 20 |
| | Thickness of pressure-sensitive adhesive sheet [µm] | 91 | 91 | 103 | 153 |
| Characteristics of first pressure-sensitive adhesive layer | Ordinary state pressure-sensitive adhesive strength X [N/20 mn] | 5.55 | 4.93 | 3.85 | 3.60 |
| | Pressure-sensitive adhesive strength after heating at (Tgas-10)°C Y [N/20 mn] | 5.95 | 6.10 | 3.56 | 3.49 |
| | Pressure-sensitive adhesive strength after heating at (T_{gas}+15)°C [N/20 mn] | 0.04 | 0.04 | 0.04 | 0.05 |
| | Residual ratio of pressure-sensitive adhesive strength Y/X [%] | 107% | 124% | 92% | 97% |
| | Foaming initiation temperature of thermally expandable microspheres T_{gas} [°C] | 195 | 215 | 175 | 175 |
| | Volume filling ratio of thermally expandable microspheres | 27.1% | 22.4% | 23.0% | 23.0% |
| Characteristics of resin layer | Storage modulus of elasticity G' at 160°C [MPa] | 0.06 | 0.06 | 0.14 | 0.14 |
| Heat resistance of pressure-sensitive adhesive sheet | Sheet thickness deformation initiation temperature by TMA T_{foaming} [°C] | 196.8 | 208.0 | 167.2 | 166.8 |
| | T_{gas}-10 [°C] | 185.0 | 205.0 | 165.0 | 165.0 |
| Unevenness of surface on second pressure-sensitive adhesive layer | Ra after heating at 130°C for 30 minutes and storage at 25°C/60%RH for 1 day (Initial) [nm] | 185.4 | 185.4 | 187.3 | 190.3 |
| | Ra after heating at 160°C for 450 seconds after the storage (After heating) [nm] | 189.2 | 194.9 | 217.3 | 204.5 |
| | Ra change ratio before and after heating [%] | 102.1% | 105.1% | 116.0% | 107.5% |
| | Variation in chip shift (Max-Min.) [µm] | 18.5 | 19.1 | 26.3 | 23.1 |

**Table 3**

| | | Example 9 | Comparative Example 1 | Comparative Example 2 | Comparative Example 3 |
|---|---|---|---|---|---|
| Configuration of pressure-sensitive adhesive sheet | Second pressure-sensitive adhesive layer | Pressure-sensitive adhesive (7)/5 µm | Pressure-sensitive adhesive (7)/5 µm | Pressure-sensitive adhesive (7)/5 µm | Pressure-sensitive adhesive (7)/5 µm |
| | Base material | PET | PET | PET | PET |
| | Thickness of base material [µm] | 50 | 38 | 38 | 38 |
| | Composition for forming resin layer | Composition 2 for forming resin layer | Composition 1 for forming resin layer | Composition 1 for forming resin layer | Composition 1 for forming resin layer |
| | Resin layer thickness [µm] | 28 | 13 | 13 | 13 |
| | First pressure-sensitive adhesive layer/composition for forming pressure-sensitive adhesive layer | Composition 3 for forming pressure-sensitive adhesive layer | Composition 1 for forming pressure-sensitive adhesive layer | Composition 5 for forming pressure-sensitive adhesive layer | Composition 6 for forming pressure-sensitive adhesive layer |
| | Thickness of first pressure-sensitive adhesive layer [µm] | 20 | 35 | 35 | 35 |
| | Thickness of pressure-sensitive adhesive sheet [µm] | 103 | 91 | 91 | 91 |
| Characteristic s of first pressure-sensitive adhesive layer | Ordinary state pressure-sensitive adhesive strength X [N/20 mn] | 5.40 | 4.63 | 4.24 | 4.07 |
| | Pressure-sensitive adhesive strength after heating at (Tgas-10)°C Y [N/20 mn] | 4.90 | 2.37 | 0.23 | 0.15 |
| | Pressure-sensitive adhesive strength after heating at (T_{gas}+15)°C [N/20 mn] | 0.04 | 0.03 | 0.03 | 0.03 |
| | Residual ratio of pressure-sensitive adhesive strength Y/X [%] | 91% | 51% | 5% | 4% |
| | Foaming initiation temperature of thermally expandable microspheres T_{gas} [°C] | 195 | 175 | 175 | 175 |
| | Volume filling ratio of thermally expandable microspheres | 27.1% | 23.0% | 28.7% | 33.6% |
| Characteristic s of resin layer | Storage modulus of elasticity G' at 160°C [MPa] | 0.06 | 0.14 | 0.14 | 0.14 |
| Heat resistance of pressure-sensitive adhesive sheet | Sheet thickness deformation initiation temperature by TMA T_{foaming} [°C] | 192.1 | 164.7 | 164.2 | 163.6 |
| | T_{gas}-10 [°C] | 185.0 | 165.0 | 165.0 | 165.0 |
| Unevenness of surface on second pressure-sensitive adhesive layer | Ra after heating at 130°C for 30 minutes and storage at 25°C/60%RH for 1 day (Initial) [nm] | 182.9 | 178.9 | 181.3 | 175.7 |
| | Ra after heating at 160°C for 450 seconds after the storage (After heating) [nm] | 189.3 | 333.2 | 410.8 | 483.1 |
| | Ra change ratio before and after heating [%] | 103.5% | 186.2% | 226.6% | 275.0% |
| | Variation in chip shift (Max-Min.) [µm] | 18.9 | 45.9 | 117.2 | 183.7 |

### Reference Signs List

**10** base material
**20** resin layer
**30** first pressure-sensitive adhesive layer
**40** second pressure-sensitive adhesive layer
**100, 200** pressure-sensitive adhesive sheet

## Claims

1. A pressure-sensitive adhesive sheet, comprising in this order:
a base material;
a resin layer; and
a first pressure-sensitive adhesive layer,
wherein the first pressure-sensitive adhesive layer contains thermally expandable microspheres, and
wherein a thickness deformation initiation temperature Tf (°C) of the pressure-sensitive adhesive sheet by TMA and a gasification initiation temperature Tgas (°C) of the thermally expandable microspheres by EGA/MS have a relationship of Tf≥Tgas-10.

2. The pressure-sensitive adhesive sheet according to claim 1, further comprising a second pressure-sensitive adhesive layer on a side of the base material opposite to the resin layer.

3. The pressure-sensitive adhesive sheet according to claim 2, wherein a ratio (change ratio) of a surface roughness Ra(II) of a surface of the second pressure-sensitive adhesive layer after the pressure-sensitive adhesive sheet has been heated under an environment of 130°C for 30 minutes, stored at 25°C/60%RH for 24 hours, and then heated under an environment of 160°C for 450 seconds to a surface roughness Ra(I) of the surface of the second pressure-sensitive adhesive layer after the pressure-sensitive adhesive sheet has been heated under the environment of 130°C for 30 minutes and then stored at 25°C/60%RH for 24 hours is 130% or less.

4. The pressure-sensitive adhesive sheet according to claim 1, wherein the gasification initiation temperature Tgas of the thermally expandable microspheres is less than 180°C.

5. The pressure-sensitive adhesive sheet according to claim 1, wherein the gasification initiation temperature Tgas of the thermally expandable microspheres is equal to or more than 180°C.

6. The pressure-sensitive adhesive sheet according to claim 1, wherein a thickness of the first pressure-sensitive adhesive layer is smaller than a thickness of the resin layer.

7. The pressure-sensitive adhesive sheet according to claim 1, wherein a volume filling ratio of the thermally expandable microspheres in the first pressure-sensitive adhesive layer is 21% or less.

8. The pressure-sensitive adhesive sheet according to claim 1, wherein a dynamic storage modulus of elasticity G' at 160°C of the resin layer is 0.1 MPa or less.

9. The pressure-sensitive adhesive sheet according to claim 1, wherein the base material has a thickness of from 40 µm to 200 µm.
